# EUROPÄISCHE PATENTSCHRIFT

(11) **EP 0 867 314 B1**
(45) Veröffentlichungstag und Bekanntmachung des Hinweises auf die Patenterteilung: **22.01.2003**
(21) Anmeldenummer: 98105452.1
(22) Anmeldetag: 26.03.1998
(51) Int. Cl.: B60G 7/02, B60G 17/02

(54) **Fahrzeuganhänger mit höhenverstellbarer Achsbockbefestigung**
Height adjustable axle support bracket for vehicle trailers
Support d'appui d'essieu réglable en hauteur pour remorques de véhicule

(30) Priorität: 29.03.1997 DE 29705672 U
(43) Veröffentlichungstag der Anmeldung: 30.09.1998
(73) Patentinhaber: AL-KO KOBER AG, D-89359 Kötz (DE)
(72) Erfinder: Wöhrle, Rudolf, 89335 Ichenhausen/Rieden (DE); Böller, Josef, 86476 Neuburg/Wattenweiler (DE)
(74) Vertreter: Ernicke, Hans-Dieter, Dipl.-Ing.

(56) Entgegenhaltungen:
- WO-A-95/08450
- DE-C- 899 145
- DE-U- 7 540 484
- DE-U- 9 103 811
- FR-A- 2 371 333

## Beschreibung

Die Erfindung betrifft einen Fahrzeuganhänger in Form eines Hochladers mit den Merkmalen im Oberbegriff des Hauptanspruches.

Die in der Praxis als sogenannte Hochlader bekannten Fahrzeuganhäger haben ein Fahrgestell, mindestens eine Achse mit einer Achsbockbefestigung und einem hochliegenden Aufbau, der mit Abstand oberhalb der Fahrzeugräder angeordnet ist. In diesen Abstand geht auch der notwendige Federweg mit ein. Die bisher bekannten Hochlader wurden mit Spezialachsen gebaut, die jeweils an die Reifengröße angepaßt waren. Dadurch waren für jeden Anhänger unterschiedliche Achsen erforderlich, was einen erheblichen Bau- und Kostenaufwand bedeutete.

Die DE-U 91 03 811 zeigt gattungsgemäße Fahrzeuganhänger mit konventionellen Fahrgestellen für Wohnwagen und dgl., die ein oder zwei gefederte Achsen mit zwei Radlenkerhebeln und zwei endseitigen Achsböcken sowie eine Achsbockbefestigung aufweisen. Auf dem Fahrgestell kann ein Aufbau angeordnet werden. Bei diesen Fahrzeuganhängern ist eine Längenverstellbarkeit zwischen Aufbau und Achse möglich, um den Schwerpunkt verändern und Einheitsdeichseln verwenden zu können. Hierbei haben die Längsholme variable Befestigungspunkte, um den Aufbau und/oder die Achse an unterschiedlichen Stellen in Längsrichtung des Fahrgestells befestigen zu können. Bei Anordnung einer längenverstellbaren Achse haben die Längsholme eine geschlossene Unterseite ohne Achsausschnitt, wobei der Achsbock über eine Längsreihe von Befestigungsbohrungen verstellbar ist.

Aus der FR-A-2 371 333 ist ein Fahrzeuganhänger bekannt, der auf gefederte Zentralachsen mit endseitigen Achsböcken verzichtet und statt dessen Einzelradaufhängungen vorsieht, die aus kurzen abgewinkelten Achsträgern mit endseitig fliegend gelagerten Achsbolzen für die Räder bestehen. Die Längs- und Querträger des Fahrgestells haben mehrere seitlich oder nach unten offene Schächte mit mehrere Befestigungspunkten zur verstellbaren Aufnahme der Achsträger. Durch die verstellbaren Achsträger soll die Spurweite des Anhängers, seine Höhe über dem Boden und die Anhängerausrichtung in Längs- oder Querrichtung verändert werden können. Außerdem lässt sich die Zugdeichsel an unterschiedlichen Stellen je nach Ausrichtung des Anhängers anbringen.

Es ist Aufgabe der vorliegenden Erfindung, für Hochlader-Fahrzeuganhänger eine bessere Bauform aufzuzeigen.

Die Erfindung löst diese Aufgabe mit den Merkmalen im Hauptanspruch.

Der erfindungsgemäße Fahrzeuganhänger ist mit einer höhenverstellbaren Achsbockbefestigung ausgerüstet, die es erlaubt, mit einer Einheitsachse zu arbeiten und diese über die variable Achsbockbefestigung an unterschiedliche Reifengrößen angepaßt zu montieren. Durch diese Einheitsachse kann einerseits der Achswinkel trotz unterschiedlicher Montagehöhe konstant gehalten werden. Vor allem wird der Bau- und Kostenaufwand wesentlich reduziert, weil die Einheitsachse für unterschiedlichste Fahrzeuganhänger einsetzbar ist. Besondere Vorteile bestehen hierbei für die Hochlader.

Die höhenverstellbare Achsbockbefestigung besitzt ein Schraubregister mit mehreren vertikalen Schraublochreihen, wobei die Schraublochreihen vorzugsweise an Achsböcken angeordnet sind und mit vorgegebenen Schraubbohrungen am Fahrgestell zusammenwirken. Von besonderem Vorteil ist es hierbei, zumindest einen Teil der Schraublöcher mit napfförmig ineinandergreifenden Wandverformungen auszurüsten und diese vorzugsweise am unteren Ende des Achsausschnittes anzuordnen. Auf diese Weise können die Achskräfte besonders gut am Fahrgestell abgestützt werden, wobei auch der Achsausschnitt unter Aufnahme der Querkräfte überbrückt und stabilisiert wird.

Der erfindungsgemäße Fahrzeuganhänger ermöglicht *es,* auch ein einheitliches Fahrgestell mit zumindest einheitlichen Längsholmen vorzusehen und für die Befestigung variabler Aufbauten mit unterschiedlichen Höhenerfordernissen bzw. für unterschiedliche Reifengrößen einen Hilfsrahmen einzusetzen. Die variable Achsbockbefestigung kann dabei das Fahrgestell und den Hilfsrahmen beaufschlagen, was eine zusätzliche Stabilität mit sich bringt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine schematische Draufsicht auf einen Fahrzeuganhänger mit starrer Deichsel und Kugelkopfanhängerkupplung,
- Figur 2:: eine Seitenansicht eines Fahrgestelles mit Hilfsrahmen und variabler Achsbockbefestigung mit zwei Reifengrößen,
- Figur 3:: eine vergrößerte Darstellung des Achsausschnittes am Fahrgestell,
- Figur 4:: ein Schnitt durch das Fahrgestell von Figur 3 entsprechend Schnittlinie IV/IV,
- Figur 5:: eine Draufsicht auf den Achsbock und
- Figur 6-8:: in einem Querschnitt durch die Achsbockbefestigung in verschiedenen Montagehöhen.

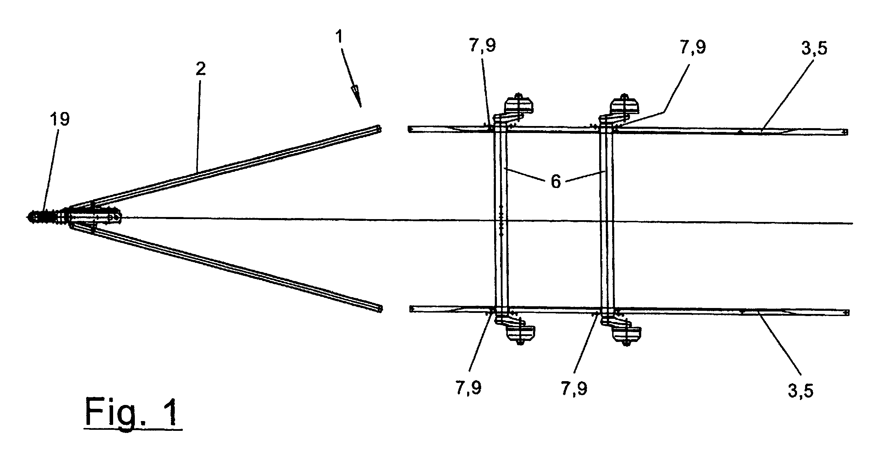

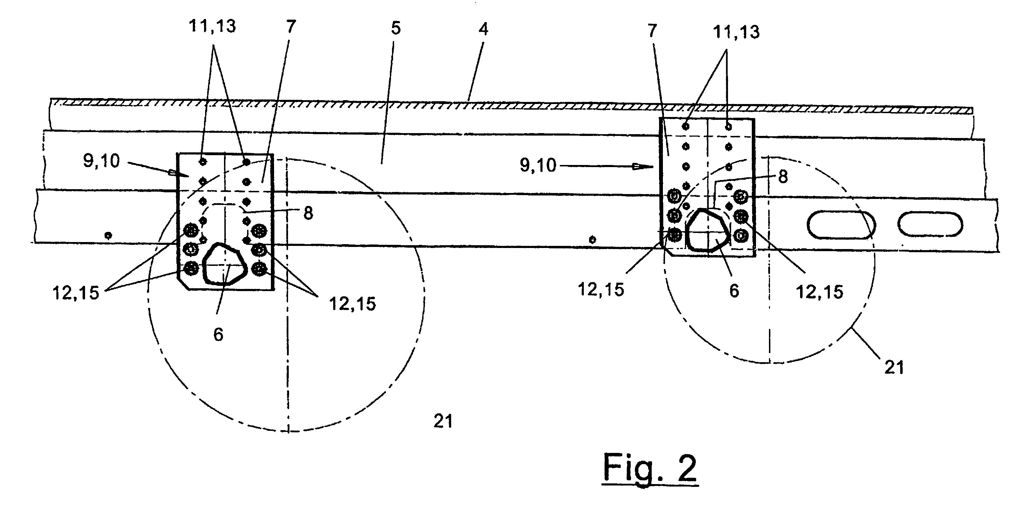

Figur 1 zeigt einen Fahrzeuganhänger (1), der eine starre Zugdeichsel (2) mit einer endseitigen Anhängerkupplung (19) und ein- oder zwei Achsen (6) aufweist. Die Anhängerkupplung (19) ist vorzugsweise als Kugelkopfkupplung ausgebildet und kann eine Auflaufbremse beinhalten. Das Fahrgestell (3) wird von der Deichsel (2) und mindestens zwei Längsholmen gebildet, die gegebenenfalls durch Quertraversen zusätzlich abgestützt sind. Die Achsen (6) sind mit ihren endseitigen Achsböcken (7) an den Längsholmen (3) befestigt. Hierbei ist eine höhenverstellbare Achsbockbefestigung (9) vorgesehen, die es in der nachfolgend beschriebenen Weise gestattet, die Achsen (6) in unterschiedlichen Höhen am Fahrgestell (3) zu montieren.
Wie Figur 2 in einer Seitenansicht verdeutlicht, ist der Fahrzeuganhänger (1) als sogenannter Hochlader ausgebildet, bei dem der Aufbau (4) mit Abstand oberhalb der Fahrzeugräder (21) angeordnet ist. Der Höhenabstand berücksichtigt dabei auch den nötigen Federweg. Der Aufbau (4) kann in beliebig geeigneter Weise ausgebildet sein. Figur 2 zeigt den häufigen Anwendungsfall einer Flachpritsche.

Zur Erzielung der notwendigen Aufbauhöhe kann auf dem Fahrgestell (3) ein Hilfsrahmen (5) montiert sein, auf dem der Aufbau (4) ruht. Dies ermöglicht die Verwendung eines einheitlichen Fahrgestelles (3) für unterschiedliche Fahrzeuganhänger, wobei die erforderlichen Höhenabstände des Aufbaues (4) über angepaßte Hilfsrahmen (5) des Aufbauherstellers geschaffen werden.

Wie Figur 2 verdeutlicht, sind für unterschiedliche Raddurchmesser unterschiedliche Einbauhöhen der Achse (6) erforderlich. Die Längsholme (3) weisen zur Aufnahme der Achse (6) einen nach unten offenen Achsausschnitt (8) auf. Die Achsen (6) sind vorzugsweise als Geradlenkerachsen mit einem Gummi- oder Torsionsfederelement und Radlenkerhebeln ausgebildet.

Der Fahrzeuganhänger (1) besitzt eine höhenverstellbare Achsbockbefestigung (9), die es erlaubt, die Achse (6) je nach Raddurchmesser in unterschiedlichen Höhen am Fahrgestell (3) bzw. am Hilfsrahmen (5) zu befestigen. Die Achsbockbefestigung (9) besitzt ein Schraubregister (10) mit mehreren vertikalen Schraublochreihen (11,12), die die besagte Höhenverstellbarkeit bieten. Hierbei sind vorzugsweise die Schraublochreihen (11,12) an den Achsböcken (7) angeordnet. Am Fahrgestell (3) und/oder am Hilfsrahmen (5) sind dagegen vier oder mehr vorgegebene Schraubbohrungen (14,16) angeordnet.

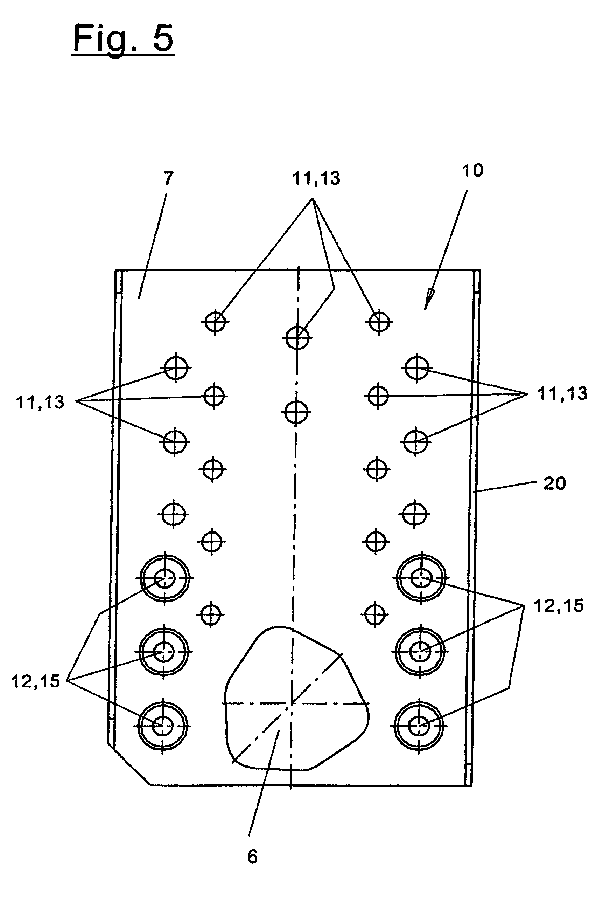

Wie Figur 2-8 verdeutlichen, ist ein Teil der Schraublöcher (13,14) am Achsbock (7) und am Fahrgestell (3) bzw. Hilfsrahmen (5) als einfache Durchgangsbohrungen für Schrauben (18) oder andere geeignete Befestigungsmittel ausgebildet. Ein anderer Teil der Schraublöcher (15,16) am Fahrgestell (3) und am Achsbock (7) weist hingegen napfförmig ineinandergreifende Wandverformungen (17) auf. Diese Wandverformungen (17) bieten eine formschlüssige Abstützung und Führung der aneinanderliegenden Bleche von Achsbock (7) und Längsholmen (3) und erlauben die Aufnahme von Querkräften.

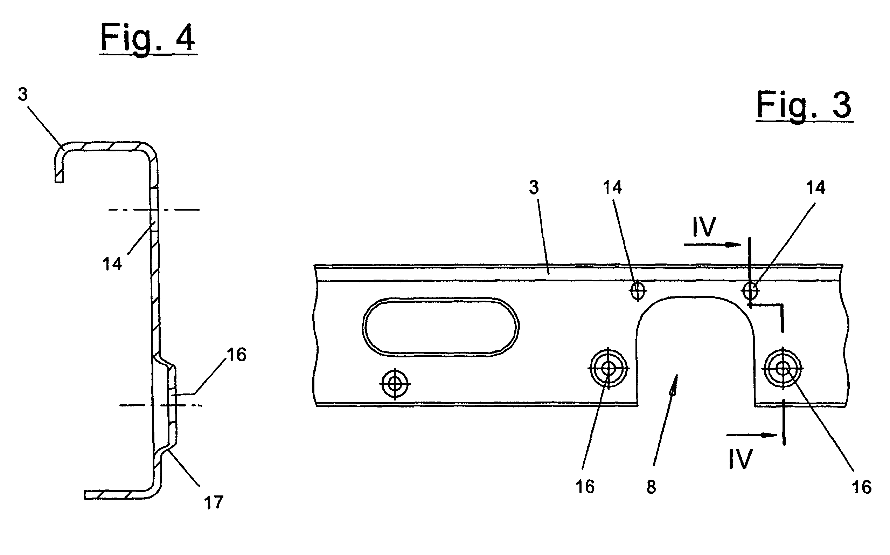

Figur 3-5 verdeutlichen die Einzelausbildung. Am Achsbock (7) sind beidseits der Achse (6) zwei Schraublochreihen (12) mit je drei napfförmigen Schraublöchern (15) angeordnet. Darüber können etwa in Verlängerung zwei weitere Schraublochreihen (11) mit einfachen Durchgangsbohrungen (13) angeordnet sein. Zwischen den Schraublochreihen (12) und im wesentlichen oberhalb dazu sind zwei ebenfalls gegenüber der Mitte distanzierte vertikale Schraublochreihen (11) mit einfachen Durchgangsbohrungen (13) angeordnet. Im oberen Bereich des Achsbockes (7) können etwa in der Mittellinie weitere Durchgangsbohrungen vorhanden sein. Das Schraubregister (10) mit den Schraublochreihen (11) ist so ausgebildet, daß ein Teil der Durchgangsbohrungen (13) mit den entsprechenden Gegenbohrungen am Längsholm (3) und ein anderer Teil der Schraublöcher (13) mit entsprechenden Durchgangsbohrungen am Hilfsrahmen (5) zusammenwirkt. Durch diese Doppelbefestigung des Achsbockes (7) an den Längsholmen (3) und am Hilfsrahmen (5) können diese letztgenannten Teile gegeneinander fixiert werden, wodurch gegebenenfalls weitere Befestigungen zwischen Fahrgestell (3) und Hilfsrahmen (5) eingespart werden können.

Figur 3 verdeutlicht die Anordnung am Längsholm (3) im Bereich des Achsausschnittes (8). Hier sind beidseits des Achsausschnittes (8) in dessen unteren Bereich zwei napfförmige Schraublöcher (16) vorgesehen. Im oberen Bereich des Achsausschnittes (8) sind zwei als Durchgangsbohrungen ausgebildete Schraublöcher (14) vorhanden, die vorzugsweise etwas weiter zusammenstehen als die napfförmigen Schraublöcher (16). Weitere als Durchgangsbohrungen ausgebildete Schraublöcher können am Hilfsrahmen (5) angeordnet sein, der hier nicht dargestellt ist. Figur 4 zeigt diese Ausbildung des Längsholmes (3) in einem Querschnitt. Entsprechend der Schraublochanordnung an Längsholmen (3) und Hilfsrahmen (5) sind die napfförmigen Schraublöcher (15) am Achsbock (7) im unteren Bereich nahe der Achse (6) angeordnet, während die als Durchgangsbohrungen ausgebildeten Schraublöcher (13) darüber bzw. im oberen Achsbockbereich zu finden sind.

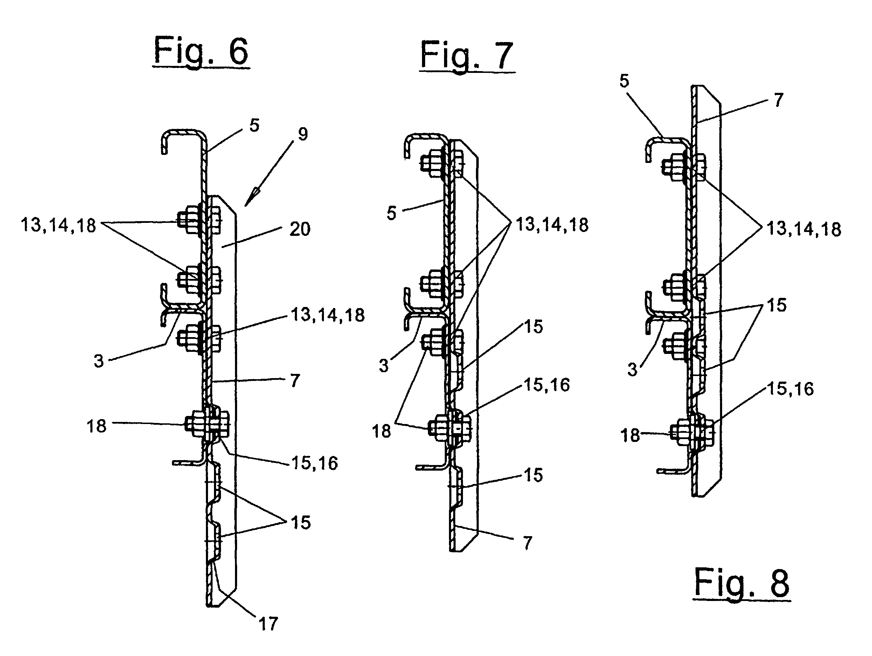

Figur 6-8 zeigen die höhenverstellbare Achsbockbefestigung (9) in verschiedenen Anbaustellungen, Figur 6 zeigt die tiefgestellte Lage, die dem linken Teil von Figur 2 entspricht. Hier befindet sich die Achse (6) mit Abstand unterhalb des Achsausschnittes (8). Von den drei achsbockseitigen napfförmigen Schraublöchern (15) sind in beiden Reihen jeweils die oberen Schraublöcher (15) belegt und greifen formschlüssig über die fahrgestellseitigen Schraublöcher (16). Über die als Durchgangslöcher ausgebildeten Schraublöcher (13) sind die Hilfsrahmen (5) und das Fahrgestell (3) mit dem Achsbock (7) verschraubt. Am Hilfsrahmen (5) sind vorzugsweise drei solche Schraublöcher (14) übereinander angeordnet, wobei in jeder Reihe die jeweils zwei unteren mit Schrauben (18) belegt sind. Figur 6-8 verdeutlichen auch, daß der Achsbock (7) an den vertikalen Seitenrändern quer abstehende Flansche (20) zur Versteifung aufweisen kann.

Figur 7 zeigt die Mittelstellung, bei der in den Schraublochreihen (12) die jeweils mittleren napfförmigen Schraublöcher (15) des Achsbockes (7) belegt sind. Die anderen napfförmigen Schraublöcher (15) sind frei. In dieser Montagestellung können die oberen und unteren einfachen Schraublöcher (14) am Hilfsrahmen (5) belegt sein.

Figur 8 zeigt die obere Montagestellung, die der rechten Darstellung von Figur 2 entspricht. In dieser Stellung befindet sich die Achse (6) im Achsausschnitt (8). In dieser Montagestellung ist von den Schraublochreihen (12) jeweils das untere napfförmige Schraubloch (15) belegt.

Wie Figur 4 und 6-8 verdeutlichen, sind die Wandverformungen (17) als vorstehende kegelstumpfförmige Ausprägungen des Bockbleches ausgebildet, in der bevorzugten Ausführungsform haben diese Wandverformungen (17) einen Boden mit einer zentralen Durchgangsbohrung für die Schraube (18). In Abwandlung hierzu können die Wandverformungen (17) als ausgebogene Krägen ausgebildet sein, die keinen Boden haben, sondern mit ihren Kragenrändern unmittelbar die Schrauböffnung bilden. Figuren 6-8 zeigen auch, wie die Wandverformungen (17) der Schraublöcher (15,16) formschlüssig ineinandergreifen und sich gegenseitig abstützen. Zur Sicherung des Verbundes können die Schrauben (18) mit einer in die Vertiefung der Wandverformungen (17) eingreifenden Distanzscheibe stabilisiert sein.

Variationen der gezeigten Ausführungsbeispiele sind in verschiedener Weise möglich. Zum einen können die Schraublochreihen (11,12) alternativ oder zusätzlich am Fahrgestell (3) und/oder am Hilfsrahmen (5) angeordnet sein. Variabel ist ferner die Zahl und Anordnung der Schraublochreihen (11,12) bzw. die Zahl der darin befindlichen Schraublöcher (13,14,15,16,). Ferner kann anstelle eines Hilfsrahmens (5) ein Fahrgestell mit entsprechend hohen Längsholmen (3) vorhanden sein. Die Längsholme (3) können außerdem in Längsrichtung in mehrere untereinander verbundene und verschraubte Holmabschnitte unterteilt sein. Sie haben vorzugsweise im Querschnitt eine c-Form, können ansonsten aber auch eine beliebige andere Querschnittsgestalt aufweisen.

### BEZUGSZEICHENLISTE

- 1: Fahrzeuganhänger, Hochlader
- 2: Deichsel
- 3: Fahrgestell, Längsholm
- 4: Aufbau, Pritsche
- 5: Hilfsrahmen
- 6: Achse
- 7: Achsbock
- 8: Achsausschnitt
- 9: Achsbockbefestigung
- 10: Schraubregister
- 11: Schraublochreihe
- 12: Schraublochreihe
- 13: Schraubloch, Achsbock
- 14: Schraubloch, Fahrgestell
- 15: Schraubloch Napf, Achsbock
- 16: Schraubloch Napf, Fahrgestell
- 17: Wandverformung
- 18: Schraube
- 19: Anhängerkupplung
- 20: Flansch
- 21: Fahrzeugrad

## Patentansprüche

1. Fahrzeuganhänger, bestehend aus einem Fahrgestell (3), mindestens einer gefederten Achse (6) mit zwei Radlenkerhebeln und zwei endseitigen Achsböcken (7) und einer Achsbockbefestigung (9), **dadurch gekennzeichnet, dass** der Fahrzeuganhänger (1) als Hochlader ausgebildet ist, dessen Aufbau (4) mit Abstand oberhalb der Fahrzeugräder (21) angeordnet ist, der Fahrzeuganhänger (1) für unterschiedliche Einbauhöhen der Achse (6) eine höhenverstellbare Achsbockbefestigung (9) aufweist, und das Fahrgestell (3) zur Aufnahme der Achse (6) nach unten offene Achsausschnitte (8) aufweist.

2. Fahrzeuganhänger nach Anspruch 1, **dadurch gekennzeichnet, dass** die Achsbockbefestigung (9) ein Schraubregister (10) mit mehreren vertikalen Schraublochreihen (11,12) aufweist.

3. Fahrzeuganhänger nach Anspruch 1 oder 2, **dadurch gekennzeichnet, dass** die Schraublochreihen (11,12) an den Achsböcken (7) angeordnet sind.

4. Fahrzeuganhänger nach Anspruch 1, 2 oder 3, **dadurch gekennzeichnet, dass** am Fahrgestell (3) und/oder einem Hilfsrahmen (5) vier oder mehr vorgegebene Schraubbohrungen (14,16) angeordnet sind.

5. Fahrzeuganhänger nach Anspruch 1 oder einem der folgenden, **dadurch gekennzeichnet, dass** ein Teil der Schraublöcher (13,14) als einfache Durchgangsbohrungen ausgebildet ist und ein Teil der Schraublöcher (15,16) napfförmige ineinander greifende Wandverformungen (17) aufweist.

6. Fahrzeuganhänger nach Anspruch 5, **dadurch gekennzeichnet, dass** die fahrgestellseitigen napfförmigen Schraublöcher (15) am unteren Ende der Achsausschnitte (8) angeordnet sind.

7. Fahrzeuganhänger nach Anspruch 5 oder 6, **dadurch gekennzeichnet, dass** die fahrgestellseitigen einfachen Schraublöcher (15) am oberen Ende der Achsausschnitte (8) angeordnet sind.

8. Fahrzeuganhänger nach Anspruch 1 oder einem der folgenden, **dadurch gekennzeichnet, dass** die Achse (6) als Einheitsachse für unterschiedliche Fahrzeuganhänger (1) ausgebildet ist.

9. Fahrzeuganhänger nach Anspruch 8, **dadurch gekennzeichnet, dass** die Einheitsachse einen gleichbleibenden Achswinkel aufweist.

10. Fahrzeuganhänger nach einem der Ansprüche 1 bis 9, **dadurch gekennzeichnet, dass** die Achsbockbefestigung (9) das Fahrgestell (3) mit einem Hilfsrahmen (5) verbindet.

## Claims

1. Vehicle trailer, consisting of a chassis (3), at least one sprung axle (6) having two wheel guide rods and two terminal axle trestles (7) and an axle trestle securing system (9), **characterized in that** the vehicle trailer (1) is configured as a high loader, whose body (4) is disposed at a distance above the vehicle wheels (21), the vehicle trailer (1) comprises a vertically adjustable axle trestle securing system (9) for different mounting heights of the axle (6) and the chassis (3) comprises axle cut-outs (8), open at the bottom, to receive the axle (6).

2. Vehicle trailer according to Claim 1, **characterized in that** the axle trestle securing system (9) comprises a screw register (10) with a plurality of vertical rows (11, 12) of screw holes.

3. Vehicle trailer according to Claim 1 or 2, **characterized in that** the rows (11, 12) of screw holes are disposed in the axle trestles (7).

4. Vehicle trailer according to Claim 1, 2 or 3, **characterized in that** four or more predetermined screw bores (14, 16) are disposed on the chassis (3) and/or on an auxiliary frame (5).

5. Vehicle trailer according to Claim 1 or one of the subsequent claims, **characterized in that** some of the screw holes (13, 14) are configured as simple through bores and some of the screw holes (15, 16) comprise bowl-shaped wall deformations (17) engaging one into the other.

6. Vehicle trailer according to Claim 5, **characterized in that** the bowl-shaped screw holes (15) on the chassis are disposed at the lower end of the axle cut-outs (8).

7. Vehicle trailer according to Claim 5 or 6, **characterized in that** the simple screw holes (15) on the chassis are disposed at the upper end of the axle cut-outs (8).

8. Vehicle trailer according to Claim 1 or one of the subsequent claims, **characterized in that** the axle (6) is configured as a standardized axle for different vehicle trailers (1).

9. Vehicle trailer according to Claim 8, **characterized in that** the standardized axle comprises a uniform axle angle.

10. Vehicle trailer according to one of Claims 1 to 9, **characterized in that** the axle trestle securing system (9) connects the chassis (3) to an auxiliary frame (5).

## Revendications

1. Remorque de véhicule composée d'un châssis (3), d'au moins un essieu (6) suspendu ayant avec deux leviers de braquage de roue et deux supports d'essieu (7) et d'une fixation de supports d'essieu (9), **caractérisée en ce que** la remorque de véhicule (1) est formée en tant que plateau chargeur dont la carrosserie (4) est placée à distance au-dessus des roues de véhicule (21), que la remorque de véhicule (1) présente une fixation de supports d'essieu (9) réglable en hauteur pour différentes hauteurs de montage de l'essieu (6) et que le châssis (3) présente des découpes d'essieu (8) ouvertes vers le bas pour recevoir l'essieu (6).

2. Remorque de véhicule selon la revendication 1, **caractérisée en ce que** la fixation de mains d'essieu (9) présente un registre de vis (10) ayant plusieurs rangées verticales de trous de vis (11,12).

3. Remorque de véhicule selon la revendication 1 ou 2, **caractérisée en ce que** les rangées de trous de vis (11, 12) sont placées sur les mains d'essieu (7).

4. Remorque de véhicule selon la revendication 1, 2 ou 3, **caractérisée en ce que** quatre forures de vis (14, 16) prédéfinies ou plus sont placées sur le châssis (3) et/ou sur un faux-châssis (5).

5. Remorque de véhicule selon la revendication 1 ou l'une des suivantes, **caractérisée en ce qu'**une partie des trous de vis (13, 14) est formée en tant que simples forures traversantes et qu'une partie des trous de vis (15, 16) présente des déformations de parois (17) en forme de cuvette en prise les unes dans les autres.

6. Remorque de véhicule selon la revendication 5, **caractérisée en ce que** les trous de vis (15) en forme de cuvette, situés du côté du châssis, sont placés sur l'extrémité inférieure des découpes d'essieu (8).

7. Remorque de véhicule selon la revendication 5 ou 6, **caractérisée en ce que** les trous de vis (15) simples, situés du côté du châssis, sont placés sur l'extrémité supérieure des découpes d'essieu (8).

8. Remorque de véhicule selon la revendication 1 ou l'une des suivantes, **caractérisée en ce que** l'essieu (6) est formé en tant qu'essieu standard pour différentes remorques de véhicule (1).

9. Remorque de véhicule selon la revendication 8, **caractérisée en ce que** l'essieu standard présente un angle d'essieu constant.

10. Remorque de véhicule selon l'une des revendications 1 à 9, **caractérisée en ce que** la fixation de mains d'essieu (9) relie le châssis (3) à un faux-châssis (5).
